# EUROPEAN PATENT APPLICATION

(11) **EP 1 613 057 A1**
(43) Date of publication of application: **04.01.2006**
(21) Application number: 05254041.6
(22) Date of filing: 29.06.2005
(51) Int. Cl.: H04N 5/00

(54) **Method and apparatus for filtering section data**

(30) Priority: 29.06.2004 KR 2004049744
(71) Applicant: SAMSUNG ELECTRONICS CO., LTD., Suwon-si, Gyeonggi-do (KR)
(72) Inventor: Hong, Gyung-pyo, Yongin-si, Gyeonggi-do (KR)
(74) Representative: Waddington, Richard

(57) **Abstract**

A method and apparatus for filtering section data are provided. The filtering apparatus includes: a mask generation unit (360) which generates a mask to be used for filtering section data based on a section number (354) in a digital broadcasting receiver and the mask generation unit (360) determines whether to generate the mask based on an accumulated number of bit number 0 or 1 at each bit position of a section number (354) already stored in the receiver. According to the method and apparatus, a section number (354) of section data received and stored by a receiver is not directly compared to a next received section number (354), and by using a mask generated based on the accumulated number of the received bit numbers, filtering is performed such that the time for performing filtering is reduced.

## Description

Apparatuses and methods consistent with the present invention relate to a method and apparatus for filtering section data of a digital broadcast, and more particularly, to a method and apparatus for filtering section data using a mask generated based on the accumulated number of each bit of a section number.

Thanks to an increase in the information processing speed of set-top boxes and widespread use of the Internet, digital media broadcasting is becoming more popular. With increasing quality and quantity of services provided, it is becoming apparent that digital media broadcasting has many advantages over analog broadcasting. In addition to audio and video data, data transmitted to users through digital media broadcasting includes service data. Additional services using the service data are one of the main advantages of digital media broadcasting.

Service data is provided to a receiver by a broadcasting provider, and then, is processed by a microprocessor of the receiver and used to provide the additional services. Service data includes application programs generated using Java, HTML, MHEG, and so on, and data required for operating application programs.

Service data makes it possible to provide interactive services using bi-directional channels. Examples of this interactive service include public opinion polls, popular song votes, viewer rate surveys, popularity vote of actors, questionnaire surveys, home shopping and movie information providing services, and so on.

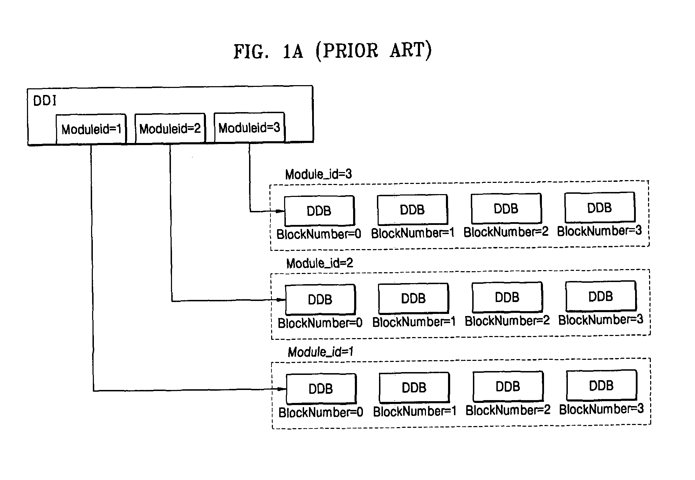

FIG. 1A is a diagram showing the structure of digital broadcasting data defined by the International Organization for Standardization (ISO) 13818-6 standard.

The ISO 13818-6 standard, which defines a digital media broadcasting, there is digital storage medium command and control (DSM-CC) data carousel, is a conventional data transmission protocol used in digital media broadcasting. The data carousel is divided into units of logical groups, referred to as modules, and the modules are divided into units of physical transmission units referred to as blocks. A broadcasting provider transmits blocks repeatedly to a receiver. That is, a data carousel is repeatedly transmitted to a receiver through a transmission channel at predetermined intervals. The receiver receives audio, video and service data in units of blocks, and then by combining the blocks, reconstructs the modules. The modules are used as logical units to implement the services described above in the receiver.

In order to implement this transmission method, the data carousel defines two tables, a download data indicator (DDI) and a download data block (DDB). The DDI has a module ID for identifying a module and a pointer to a DDB carrying the actual body of the module. A module to be transmitted is divided into units of a predetermined size, filled into a DDB, and then transmitted. A DDB includes one or more section data items.

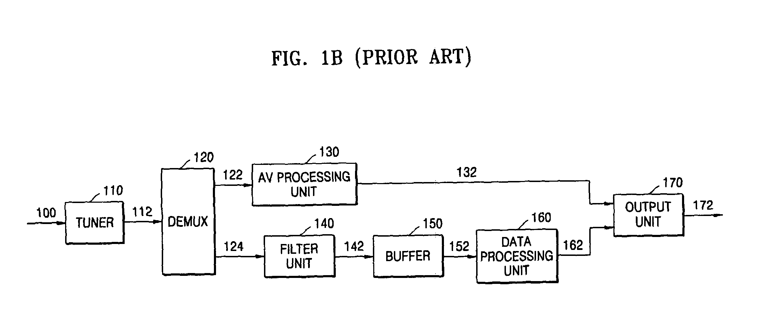

FIG. 1B is a diagram showing a conventional digital broadcasting receiver.

The digital broadcasting receiver includes a tuner unit 110 which extracts a transport stream from a predetermined channel by selecting a channel desired by a user among broadcasting streams transmitted through transmission channels, a demultiplexing unit 120 which divides transport streams into a transport stream 122 containing audio/video (AV) data and a transport stream 124 containing service data, a filter unit 140 which extracts section data desired by a user from the transport stream containing the service data, a buffer unit 150 which sequentially stores the extracted section data 142, a data processing unit 160 which reads the section data 152 stored in the buffer unit, and by processing a predetermined application, generates service output data 162, an AV processing unit 130 which by processing the transport stream 122 containing the AV data, generates AV output data 132, and an output unit 170 which outputs AV output data 132 and service output data 162 to the user.

According to the ISO 13818-6 standard, broadcasting data transmitted by digital broadcasting is transmitted in the form of a transport stream. The transport stream includes one or more packets, and each packet has a fixed size of 188 bytes. Each packet is assigned one packet ID and packets are broken down into audio packets, video packets and data packets.

Based on a packet ID, the filter unit 140 extracts only desired packets from a transport stream and by combining these packets, generates section data. Section data has a maximum size of 4096 bytes. One or more section data items form one carousel data item, and a section data item is transmitted in units of DDBs of a fixed size to a receiver. That is, a DDB includes one or more section data items.

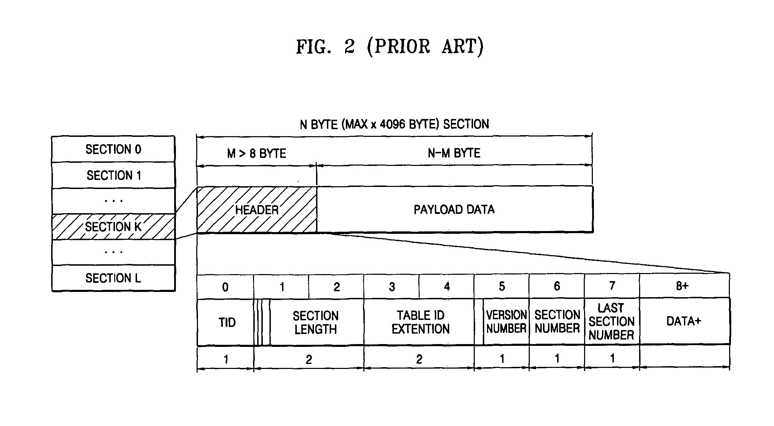

FIG. 2 is a diagram showing the internal structures of a download data block (DDB) and section data.

Referring to FIG. 2, a DDB includes L+1 sections, sections 0 through L. A section data item includes a section header and payload data.

The section header includes a table ID, a section length, a table ID extension, a version number, a section number, and a last section number.

The table ID identifies a DDB. The table ID extension is additional information added when a DDB is not identified by the table ID, and can include, for example, a module ID. The section number is a serial number of a section in a DDB. For example, if the table ID, section number, and last section number extracted from an arbitrary section header are Ox2c, 0003, and 000f, respectively, it indicates that the corresponding section data item is the fourth section among 16 section data items included in a DDB whose table ID is 0x3c. The version number indicates the version of a corresponding section data item.

Based on the table ID, module ID, version number and so on, the filter unit 140 filters section data desired by a user. Here, the table ID and other fields of a section data item desired by the user is determined using PMT, AIT, DSI, DDI, and so on, which are a variety of tables that the broadcasting provider transmits to the receiver in advance.

The data processing unit 160 has an internal memory (not shown), and stores section data transmitted from the buffer unit 150 in the memory. The section data stored in the memory is used to execute an application using a separate processor disposed in the data processing unit 160.

However, in this conventional receiver, when a new cycle of carousel data needs to be received due to data loss occurring in the buffer, section data already stored in the buffer in the previous cycle is stored in the buffer again. That is, for example, when carousel data including 16 section data items 0000 through 000f is desired to be received, section data 0001 through 0004 is stored in the internal memory of the data processing unit 160 in the first cycle, and then, in the second cycle, when identical carousel data is received, section data 0001 through 0004 is stored in the buffer and then stored again in the internal memory of the data processing unit 160. This is because determination on whether section data is received in the previous cycle is performed only when the section data arrives at the data processing unit 160.

This repeated storage of identical data increases the time needed to completely transmit carousel data required for executing an application due to the limited capacity of a receiver, and as a result, when a user is using a broadcasting application, the user has to inconveniently of wait for the output after the user's selection is input.

Also, in order to prevent this repeated storage of identical data, there is a method by which filtering is performed by comparing the section number of a received section data item with the section number of section data already stored in the receiver. However, since this method requires comparison of all bit numbers of a section number whenever a section data item is received, the processing time increases such that the time for filtering increases.

The present invention provides a method and apparatus for filtering section data, by which when section data is filtered based on a section number, a mask which is generated based on an accumulated number of bit numbers in each bit position of a section number already stored in a receiver is used to filter the section data such that the filtering time is reduced.

According to the present invention there is provided an apparatus and method as set forth in the appended claims. Preferred features of the invention will be apparent from the dependent claims, and the description which follows.

According to an aspect of the present invention, there is provided an apparatus comprising a mask generation unit for generating a mask to be used for filtering section data based on a section number in a digital broadcasting receiver, wherein whether to generate the mask is determined based on an accumulated number of 0's or 1's at each bit position of a section number already stored in the receiver.

The apparatus may generate the mask when an accumulated number of 1's indicating the frequency of accumulation of 1 at a predetermined bit position in the section number is greater than or equal to the entire number of section data items divided by 2, or when an accumulated number of 0's indicating the frequency of accumulation of 0's at a predetermined bit position in the section number is greater than or equal to the entire number of section data items divided by 2.

The apparatus may generate a reference number which has the same number of bits as the number of bits of the mask, and in which the bit number at a bit position where the accumulated number of 0's or 1's is greater than or equal to the entire number of section data items divided by 2 is 1, and only when the bit number of the section number corresponding to a bit position where the bit number of the mask is 1 is different from the bit number of the reference number at the same bit position, filtering which allows section data having the section number to pass is performed.

According to another aspect of the present invention, there is provided an apparatus for filtering section data based on a section number in a digital broadcasting receiver, including: a mask generation unit which is operable to generate a mask to be used for filtering the section data based on the section number of section data and the last section number already stored in the digital broadcasting receiver; and a filter unit which is operable to filter the section data based on the mask, wherein the mask generation unit is operable to determine whether to generate the mask, based on an accumulated number indicating the frequency of accumulation of a bit number at each bit position of the section number and the entire number of section data items.

According to still another aspect of the present invention, there is provided a method for generating a mask to be used for filtering section data based on a section number in a digital broadcasting receiver, wherein whether to generate the mask is determined based on an accumulated number of 0's or 1's at each bit position of a section number already stored in the receiver.

According to yet still another aspect of the present invention, there is provided a method for filtering section data based on a section number in a digital broadcasting receiver, including: generating a mask to be used for filtering the section data based on the section number of section data and the last section number already stored in the digital broadcasting receiver; and filtering the section data based on the mask, wherein generating the mask further includes: determining whether to generate the mask, based on an accumulated number indicating the frequency of accumulation of a bit number at each bit position of the section number and the entire number of section data items.

For a better understanding of the invention, and to show how embodiments of the same may be carried into effect, reference will now be made, by way of example, to the accompanying diagrammatic drawings in which:
FIG. 1A is a diagram showing the structure of digital broadcasting data defined in the International Standard Organization (ISO) 13818-6 standard;
FIG. 1B is a diagram showing a conventional digital broadcasting receiver;
FIG. 2 is a diagram showing the internal structures of a download data block (DDB) and section data;
FIG. 3 is a diagram showing the structure of a digital broadcasting receiver according to an exemplary embodiment of the present invention;
FIG. 4 is a diagram showing the internal structure of a mask generation unit of FIG. 3 according to an exemplary embodiment of the present invention;
FIG. 5 is a diagram showing the internal structure of a filter unit;
FIG. 6 is a diagram showing a filtering operation of a section number filter unit;
FIG. 7 is a diagram showing section data which is discarded without passing through when the reference number is --1- and the mask is 0010;
FIG. 8 is a diagram showing section data which is discarded by a filter unit when from the state of FIG. 7, the reference number changes to --10 and the mask changes to 0011; and
FIG. 9 is a flowchart of a method for filtering a section number according to an exemplary embodiment of the present invention.

Exemplary embodiments of the present invention will now be described more fully with reference to the accompanying drawings.

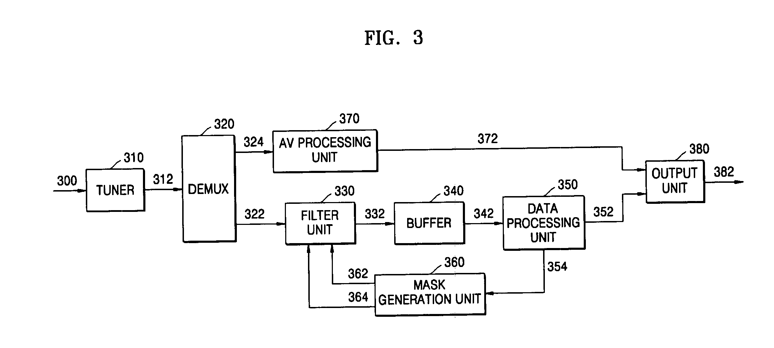

FIG.3 is a diagram showing the structure of a digital broadcasting receiver.

Referring to FIG. 3, a digital broadcasting receiver according to the present invention includes a tuner unit 310 which extracts a transport stream 312 of a predetermined channel by selecting a channel desired by a user among broadcasting streams 300 transmitted through transmission channels; a demultiplexing unit 320 which divides the transport stream 312 into a transport stream 324 containing audio/video data and a transport stream 322 containing service data; a filter unit 330 which extracts section data desired by a user from the transport stream containing the service data; a buffer unit 340 which sequentially stores the extracted section data 332; a data processing unit 350 which reads the section data 342 stored in the buffer unit 340 and by executing a predetermined application, generates service output data 352; an AV processing unit 370 which by processing the transport stream 324 containing the audio/video data, generates AV output data 372; an output unit 380 which outputs AV output data 372 and service output data 352 as an output signal 382 to the user; and a mask generation unit 360 which receives from the data processing unit 350, a section number 354 of section data transmitted to the data processing unit 350 in the previous cycle, and then, based on this, generates a reference number 362 and a mask number 364 and transmits the numbers to the filter unit 330.

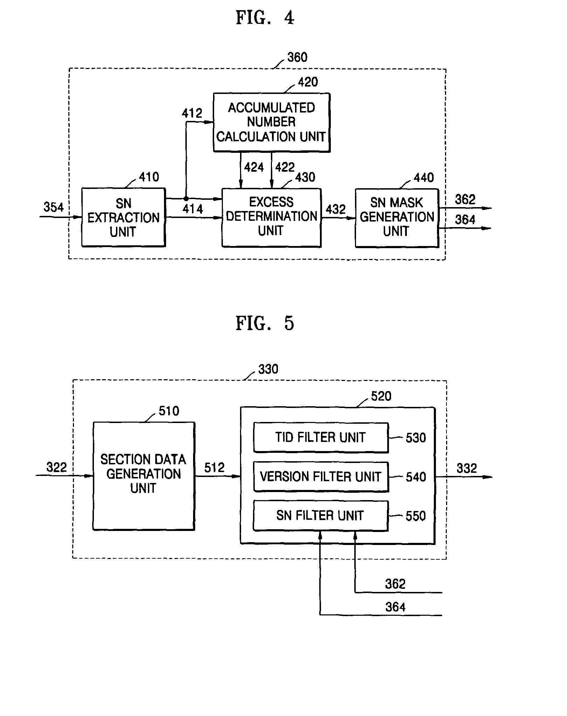

The digital broadcasting receiver of FIG. 3 is characterized in that the mask generation unit 360 is added and the filter unit 330 performs filtering based on the reference number 362 and the mask number 364 generated by the mask generation unit 360. This will now be explained in more detail with reference to FIGS. 4 and 5.

FIG. 4 is a diagram showing the internal structure of the mask generation unit 360 of FIG. 3 according to an exemplary embodiment of the present invention.

The mask generation unit 360 includes a section number extraction unit 410, an accumulated number calculation unit 420, an excess determination unit 430, and a section number mask generation unit 440.

The section number extraction unit 410 receives from the data processing unit 350 section data 354 of carousel data which is transmitted to the data processing unit 350 in the previous cycle, and based on this, extracts a section number SN 412 of the received section data and a last section number LSN 414.

The accumulated number calculation unit 420 receives the section number 412 from the section number extraction unit 410, and calculates the accumulated numbers of 0's and 1's at each bit position of the transmitted section number. Table 1 shows a process for performing accumulated number calculation when a section number is four bits long:

**Table 1**

| | Section Number | Bit 3 | | Bit 2 | | Bit 1 | | Bit 0 | |
|---|---|---|---|---|---|---|---|---|---|
| | | 1 | 0 | 1 | 0 | 1 | 0 | 1 | 0 |
| SN transmitted first | 1000 | Y | - | - | Y | - | Y | - | Y |
| SN transmitted second | 1101 | Y | - | Y | - | - | Y | Y | - |
| · | | | | | | | | | |
| · | | | | | | | | | |
| · | | | | | | | | | |
| Accumulated number for each bit | | 2 | 0 | 1 | 1 | 0 | 2 | 1 | 1 |

According to table 1, whenever a section number stored in the data processing unit 350 is input to the accumulated number calculation unit 420, the accumulated number calculation unit 420 counts the accumulated number of 1's at each bit position, and the accumulated number of 0's at each bit position, and generates the accumulated number of 1's 424 and the accumulated number of 0's 422. In the example of table 1, the accumulated number of 1's at bit 3 is C31=2, the accumulated number of 0's at bit 3 is C30=0, the accumulated number of 1's at bit 2 is C21=1, the accumulated number of 0's at bit 2 is C20=1, the accumulated number of 1's at bit 1 is C11=0, the accumulated number of 0's at bit 1 is C10=2, the accumulated number of 1's at bit 0 is C01=1, and the accumulated number of 0's at bit 0 is C00=1.
The excess determination unit 430 determines whether section data that does not need to be received occurs, based on the last section number 414 received from the section number extraction unit 410, and the accumulated numbers of 0's 422 and 1's 424 at each bit position received from the accumulated number calculation unit 420. If section data that does not need to be received occurs, the excess determination unit 430 transmits to the section number mask generation unit 440 a mask generation command signal 432 which commands the section number mask generation unit 440 to generate a mask.

The method for the excess determination unit 430 to determine whether or not section data that does not need to be received is generated will now be explained.

First, based on the last section number, the entire number of section data items belonging to one carousel data item is calculated. That is, the entire number of the section data items = last section number + 1.

Next, based on the accumulated number of 0's 422 or 1's 424 received from the accumulated number calculation unit 420 and the entire number of the section data items calculated above, it is checked whether the section number of a section data item that does not need to be received by the broadcasting reception apparatus any more is present. This operation is performed by determining whether the accumulated number of 0's or 1's is greater than or equal to P / 2, where P is equal to the entire number of section data items.

Table 2 shows 16 four-bit section numbers expressed as binary numbers. According to table 2, if the entire number of section numbers is 16, the number of 0's at each bit position of the respective section numbers is 8, and the number of 1's also 8. That is, according to the characteristic of binary numbers, in all section data items to be stored in the data processing unit 350, the number of 0's or 1's existing at each bit position of the section numbers = the entire number of section numbers (i.e., the entire number of section data items) divided by 2. Accordingly, if the accumulated number of 0's at one bit position is equal to or greater than the entire number of section data items divided by 2, it can be determined that a section data item corresponding to a section number whose bit number at the corresponding bit position is 0 does not need to be received any more. In the present exemplary embodiment, by using this characteristic of a binary number, a section number to be filtered is determined by the method described above.

**Table 2**

| Section number_Hexadecimal number | Section number_Binary number |
|---|---|
| 0 | 0000 |
| 1 | 0001 |
| 2 | 0010 |
| 3 | 0011 |
| 4 | 0100 |
| 5 | 0101 |
| 6 | 0110 |
| 7 | 0111 |
| 8 | 1000 |
| 9 | 1001 |
| A | 1010 |
| B | 1011 |
| C | 1100 |
| D | 1101 |
| E | 1110 |
| F | 1111 |

The mask generation information 432 includes an excess bit number N indicating a bit position in which the accumulated number of 0's or 1's is exceeded, and an excess bit number B indicating a bit number which exceeds in the corresponding bit number.

For example, if bit number 1 is exceeded at bit 3, then N=3 and B=1. Excess bit number N and excess bit number B are generated based on a section number 412, the accumulated numbers of 0's 422 and 1's 424.

The section number mask generation unit 440 generates a reference number 362 and a mask 364 based on the mask generation information 432 received from the excess determination unit 430. As described above, the excess bit number N of the mask generation information 432, which indicates a bit position in which the accumulated number of 0's or 1's exceeds, and excess bit number B indicating a bit number which exceeds in the corresponding bit number. The section number mask generation unit 440 generates a reference number and a mask according to the following definitions of a reference number and a mask.

The reference number 362 has the same number of bits as the number of bits in a section number, and is a binary number in which the bit number at a bit position corresponding to excess bit number N exceeds bit number B. Bit numbers in other bit positions do not matter.

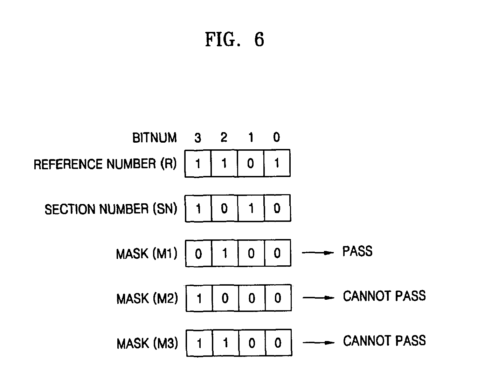

The mask 364 also has the same number of bits as the number of bits in a section number, and is a binary number having a bit value of 1 at a bit position corresponding to excess bit number N, and bit numbers of 0 at other bit positions. The role of the mask 364 in a filtering operation will be explained later with reference to FIGS. 5 and 6.

The present invention is characterized in that the filter unit 520 does not compare the section number of section data stored in the data processing unit 350 with a directly received section number, and performs filtering using a mask and a reference number.

Since predetermined bit numbers of the mask and reference number are generated only when the accumulated number of 0's or 1's is equal to or greater than the entire number of section data items divided by 2, filtering is performed only when necessary, such that the entire processing time is reduced.

Also, instead of comparing all bit numbers in a section number being filtered, only bit numbers determined by the mask and reference number are compared such that the processing time for filtering can be greatly reduced.

FIG. 5 is a diagram showing the internal structure of a filter unit.
The filter unit 330 includes a section data generation unit 510 and a section data filter unit 520. The section data filter unit 520 includes a table ID filter unit 530, a version filter unit 540, and a section number filter unit 550.

The section data generation unit 510 receives a transport stream 322 including one or more packets, and then by selectively combining packets based on packet IDs, generates section data 512. The generated section data 512 has the structure shown in FIG. 2, and includes a table ID, a version, a section number, etc.

The section data filter unit 520 filters section data based on predetermined filtering information. Filtering information is used as filtering criteria, and can be a table ID, a version, a section number, etc. Based on the filtering information, the section data filter unit 520 includes a table ID filter unit 530, a version filter unit 540, and a section number filter unit 550.

An aspect of the present invention is that the section number filter unit 550 receives a reference number 362 and a mask 364 generated by the mask generation unit 360, as filtering reference information. That is, the section number filter unit 550 performs section number filtering according to the reference number 362 and the mask 364.

FIG. 6 is a diagram showing a filtering operation of the section number filter unit 550.

Reference number R and masks M1, M2, and M3 are the reference number 362 and the mask 364 transmitted by the mask generation unit 360. Section number SN is the section number of section data input to the filter unit 330, or the section number of section data filtered by other filter units 530 and 540 in the section data filter unit 520. Bit number BITNUM is an identifier for identifying bit positions of a reference number, a section number, and a mask.

When section data having a section number is received, and only when a bit number of a section number at a bit position where the bit number of the mask (M1, M2, M3) is 1 is different from the bit number of reference number R existing at the same bit position as that of the bit number of the section number, the section number filter unit 550 permits section data having the section number to pass. If bit numbers of two or more bit positions of a mask are 1, the bit numbers of the reference number and the bit numbers of the section number at all the bit positions should be different.

In the example of FIG. 6, in the case of mask M1, the bit position where the bit number of mask M1 is 1 is BITNUM=2, and the bit number of the reference number at this bit position is 1, and the bit number of the section number is 0. Since the bit numbers of the reference number and the section number are different, section data corresponding to the section number SN=1010 passes through the filter unit 330.

However, in the case of mask M2, the bit position where the bit number of mask M2 is 1 is BITNUM=3, the bit number of the reference number at this bit position is 1, and the bit number of the section number is also 1. Accordingly, since the bit numbers of the reference number and the section number are identical, section data corresponding to the section number SN=1010 is discarded.

Lastly, the case of mask M3 will now be explained. In the Mask M3, the number of bit positions having a bit number of 1 is 2. In the case of M3, the bit position where the bit number of mask M3 is 1 is BITNUM=3,2, the bit numbers of the reference number at these bit positions are 1, 1, and the bit numbers of the section number are 1, 0. Though the bit numbers of the reference number and the section number are different at the bit position where BITNUM=2, the bit numbers of the reference number and the section number are identical at the bit position where BITNUM=3, and accordingly, section data corresponding to section number SN=1010 cannot pass and is discarded.

As shown in mask M3, as the number of bit positions where the bit number of a mask is 1 increases, section data that cannot pass through the filter unit 330 increases. If the number of section data items stored in the data processing unit 350 increases, a new mask is generated at a predetermined time and is transmitted to the filter unit. In the new mask, the number of bit positions where the bit number is 1 increases by 1. Here, the predetermined time is a time point when the accumulated number of 0's or 1's at a predetermined bit position becomes equal to or greater than the number of section data items divided by 2.

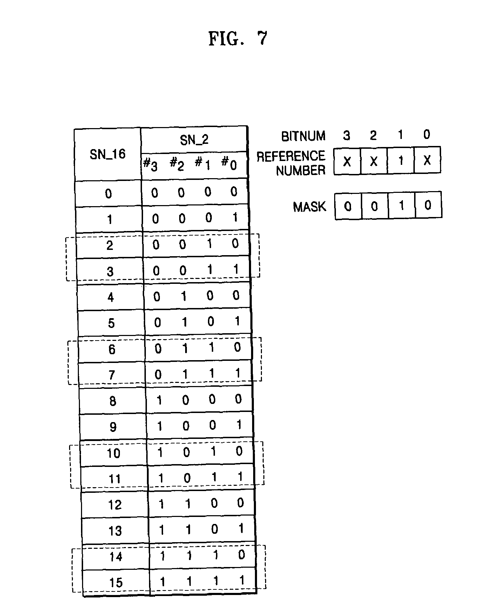

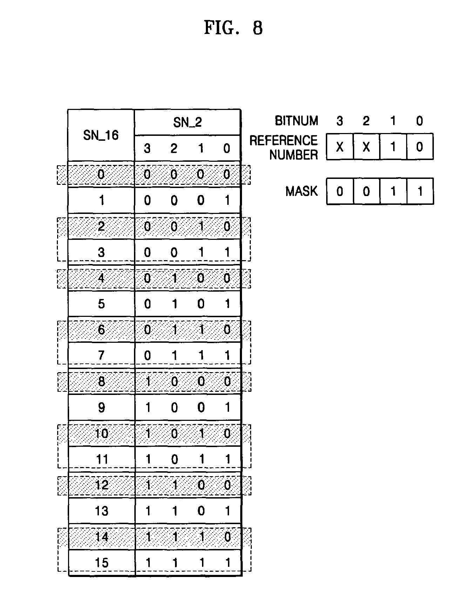

FIGS. 7 and 8 are diagrams showing the relation between the bit positions where the bit number of a mask is 1 and changes in the number of section data items filtered.

FIG. 7 is a diagram showing section data which is discarded when the reference number is --1- and the mask is 0010.

The meaning of when the mask is 0010 and the reference number is --1- is that at the position where BITNUM=1, the accumulated number of 1's of section data stored in the data processing unit is equal to or greater than 8. Since the bit position where the bit number of the mask is 1 is BITNUM=1, section data items corresponding to section numbers indicated by dotted line blocks in FIG. 7 are all discarded. That is, the binary section numbers of discarded section data items are 0010, 0011, 0110, 0111, 1010, 1011, 1110, and 1111, and eight hexadecimal section numbers corresponding to these numbers i.e., 2, 3, 6, 7, 10, 11, 14, and 15.

FIG. 8 is a diagram showing section data which is discarded by a filter unit when the reference number changes from the state of FIG. 7 to --10 and the mask changes to 0011. The meaning of when the reference number changes to --10 and the mask changes to 0011 is that in addition to the state of FIG. 7, the accumulated number of 0's of section data at the position where bit number=0 stored in the data processing unit is equal to or greater than 8.

Since the bit position where the bit number of the mask is 1 is bit=0, section data items corresponding to the section numbers indicated by shaded blocks should be all discarded. The section numbers that should be discarded by the bit numbers of the mask and the reference number added in FIG. 8 are eight numbers, 0, 2, 4, 6, 8, 10, 12, and 14 (shaded parts). It should be noted that among these eight numbers, section numbers 2, 6, 10, and 14 are overlapping the section numbers (dotted line block part) discarded using the reference number and the mask of FIG. 7. That is, only four numbers, 0, 4, 8, and 12, are additionally discarded using the reference number and the mask of FIG. 8. Accordingly, FIG. 8 shows that whenever the number of bit positions where the bit number of a mask is 1 increases, half of the section data are not necessarily discarded.

According to the reference number and the mask of FIG. 8, a total of 8+4=12 section data items cannot pass through the filter unit 330. Accordingly, twelve section data items can be prevented from being repeatedly stored in the data processing unit.

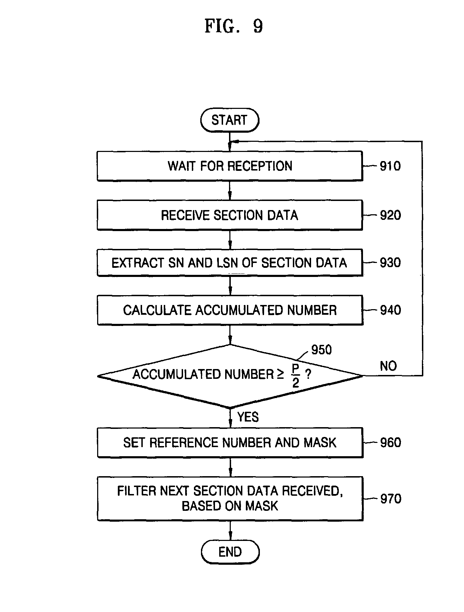

FIG. 9 is a flowchart of a method for filtering a section number according to an exemplary embodiment of the present invention.

In operation 910, the section number filter unit 550 waits for reception of section data from the section data generation unit 510.

In operation 920, the section number filter unit 550 receives section data. The received section data can be section data filtered by combination of the operation of other filter units 530 and 540 in the filter unit 330.

In operation 930, the section number extraction unit 410 extracts a section number SN and a last section number LSN from the section header of section data.

In operation 940, the accumulated number calculation unit 420 calculates the accumulated numbers of 1's and 0's by counting the number of bit number 1's and bit number 0's at each bit position of a section number whenever a section number is received.

In operation 950, the excess determination unit 430 determines whether or not the accumulated number of 1's or 0's calculated in operation 940 is equal to or greater than P / 2, where P is equal to the entire number of section data items. The number of sections can be generated from the last section number.

If the accumulated number of 1's or 0's is equal to or greater than P / 2, operation 960 is performed, or else, operation 910 is again performed and the next section data is received.

In operation 960, a reference number and a mask are set by determining the bit number of a bit position where the accumulated number of 0's or 1's is greater than the entire number of section data items divided by 2.

In the reference number, the bit number at the bit position where the accumulated number of 0's or 1's is greater than the entire number of section data items divided by 2 is set to 1 (in the case of the accumulated number of 1's) or 0 (in the case of the accumulated number of 0's), and setting bit numbers of other bit positions does not matter.

In the mask, the bit number at the bit position where the accumulated number of 0's or 1's is greater than the entire number of section data items divided by 2 is set to 1 (both the accumulated numbers of 1's and 0's), and bit numbers of other bit positions are set to all 0. Here, the meaning of setting a number is that after the reference number and the mask are generated by the mask generation unit 360, the generated mask and reference number are input to the section number filter unit 550 as filtering information.

In operation 970, the section number filter unit 550 filters section data based on the mask and reference number set in operation 960.

When section data having a section number is received, and only when a bit number of a section number at a bit position where the bit number in the mask is 1 is different from the bit number of reference number existing at the same bit position as that of the bit number of the section number, the section number filter unit 550 permits section data having the section number to pass. If bit numbers of two or more bit positions of the mask are 1, the bit numbers of the reference number and the bit numbers of the section number at all the bit positions should be different.

When a broadcasting receiver receives carousel data of a first cycle, repeated section data does not occur in one carousel data and therefore, the loop of FIG. 9, that is, only operations 910 through 950, will be performed. However, when the broadcasting receiver receives carousel data of a new cycle due to data loss by the processing speed difference of the buffer and the data processing unit, or other reasons, repeated section data can occur, and at this time, this repeated section data will be filtered by operations 960 and 970.

Meanwhile, the section number filtering method according to the present invention can be implemented as a computer program. Codes and code segments forming the program can be easily inferred by the programmers in the technology field of the present invention. Also, the program is stored in computer readable media, and read and executed by a computer to implement the section number filtering method. The computer readable media includes magnetic recording media, optical recording media and carrier wave media.

Although a few preferred embodiments have been shown and described, it will be appreciated by those skilled in the art that various changes and modifications might be made without departing from the scope of the invention, as defined in the appended claims.

According to the section data filtering method and apparatus according to the present invention as described above, a section number of section data received and stored by a receiver is not directly compared to a next received section number, and by using a mask generated based on the accumulated number of the received bit numbers, filtering is performed such that the entire processing time is reduced.
Also, when filtering is performed, instead of comparing all bit numbers of a section number, by comparing predetermined bit numbers determined by a mask and a reference number, the processing time for filtering can be greatly reduced.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus comprising a mask generation unit (360) which is operable to generate a mask for filtering section data based on a section number (354) in a digital broadcasting receiver, wherein the mask is generated based on an accumulated number of 0's or 1's at each bit position of a section number (354) which is previously stored in the digital broadcasting receiver.

2. The apparatus of claim 1, wherein the mask generation unit (360) is operable to generate the mask if an accumulated number of 1's, which indicates the frequency of accumulation of 1 at a predetermined bit position in the section number (354), is greater than or equal to an entire number of section data items divided by 2, or if an accumulated number of 0's, which indicates the frequency of accumulation of 0's at a predetermined bit position in the section number (354), is greater than or equal to the entire number of section data items divided by 2.

3. The apparatus of claim 2, wherein the mask generation unit (360) is operable to generate a reference number (362) which has a same number of bits as a number of bits of the mask, and in which a bit number is 1 at a bit position where the accumulated number of 0's or 1's is greater than or equal to the entire number of section data items divided by 2, and further comprising a filter unit (330) which filters the section data, wherein only if a bit number of the section number (354), which corresponds to a bit position where the bit number of the mask is 1, is different from the bit number of the reference number (362) at a same bit position, the filter unit (330) is operable to allow section data having the section number (354) to pass is performed.

4. The apparatus of claim 3, wherein if a number of bit positions where the bit number of the mask is 1 is at least two, only if bit numbers of the reference number (362) at all bit positions where the bit number of the mask is 1 are different from bit numbers of the section number (354), the filter unit (330) is operable to allow section data having the section number (354) to pass.

5. The apparatus of any preceding claim, wherein the mask generation unit (360) comprises:
a section number extraction unit (410) which is operable to extract a section number (354) and a last section number (354) from section data previously stored in the digital broadcasting receiver;
an accumulated number calculation unit (420) which is operable to receive the section number (354) and to calculate an accumulated number of 1's, which indicates a frequency of accumulation of bit number 1, and an accumulated number of 0's, which indicates a frequency of accumulation of bit number 0 at each bit position of the section number (354);
an excess determination unit (430) which is operable to determine whether to generate the mask based on the accumulated numbers of 0's and 1's; and
a section number mask generation unit (440) which is operable to generate a mask based on a bit position where the accumulated number of 0's or 1's exceeds in the section number (354).

6. The apparatus of claim 5, wherein the section number mask generation unit (440) is operable to generate a mask in which a bit number of the bit position where an accumulated number exceeds is 1 and the remaining bit numbers are 0.

7. The apparatus of claim 5, wherein if a bit number at the bit position where the accumulated number exceeds the entire number of section data items divided by 2 is 1, the section number mask generation unit (440) is further operable to generate a reference number (362) in which the bit number at the bit position where the accumulated number exceeds the entire number of section data items divided by 2 is 1, and further comprising a filter unit (330) which is operable to filter the section data,
wherein only if the bit number of a section number (354), which corresponds to the bit position where the bit number of the mask is 1, is different from the bit number of the reference number (362) at the bit position, the filter unit (330) is operable to allow section data having the section number (354) to pass.

8. An apparatus for filtering section data based on a section number (354) in a digital broadcasting receiver, the apparatus comprising:
a mask generation unit (360) which is operable to generate a mask to be used for filtering section data based on a section number (354) of the section data and a last section number (354) which is previously stored in the digital broadcasting receiver; and
a filter unit (330) which is operable to filter the section data based on the mask,
wherein the mask generation unit (360) is operable to determine whether to generate the mask, based on an accumulated number indicating frequency of accumulation of a bit number at each bit position of the section number (354) and an entire number of section data items.

9. The apparatus of claim 8, wherein the mask generation unit (360) is operable to generate the mask if an accumulated number of 1's, which indicates frequency of accumulation of bit number 1 at each bit position in the section number (354), is greater than or equal to an entire number of section data items divided by 2, or if an accumulated number of 0's, which indicates frequency of accumulation of bit number 0 at each bit position in the section number (354), is greater than or equal to the entire number of section data items divided by 2.

10. The apparatus of claim 9, wherein the mask generation unit (360) is operable to generate a reference number (362) which has a same number of bits as a number of bits of the mask, and in which the bit number is 1 at a bit position where an accumulated number of 0's or 1's is greater than or equal to the entire number of section data items divided by 2, and only if a bit number of the section number (354), which corresponds to a bit position where a bit number of the mask is 1, is different from a bit number of the reference number (362) at a same bit position, the filter unit (330) is operable to allow section data having the section number (354) to pass.

11. The apparatus of claim 10, wherein if a number of bit positions where the bit number of the mask is 1 is at least two, only if bit numbers of the reference number (362) at all bit positions where the bit number of the mask is 1 are different from bit numbers of the section number (354), the filter unit (330) is operable to allow section data having the section number (354) to pass.

12. The apparatus of any one of claims 8 to 11, wherein the mask generation unit (360) comprises:
a section number extraction unit (410) which is operable to extract a section number (354) and a last section number (354) from section data which is previously stored in the digital broadcasting receiver;
an accumulated number calculation unit (420) which is operable to receive the section number (354) and calculates an accumulated number of 1's, which indicates a frequency of accumulation of bit number 1 and an accumulated number of 0's, which indicates a frequency of accumulation of bit number 0 at each bit position of the section number (354);
an excess determination unit (430) which is operable to determine whether to generate the mask based on the accumulated numbers of 0's and 1's; and
a section number mask generation unit (440) which, if it is determined to generate a mask, is operable to generate a mask based on an excess bit number indicating a bit position where the accumulated number of 0's or 1's in the section number (354) exceeds, and an excess bit number indicating a bit number exceeding in a corresponding bit number.

13. The apparatus of claim 12, wherein the section number mask generation unit (440) is operable to generate the mask if an accumulated number of 1's, which indicates the frequency of accumulation of bit number 1 at a predetermined bit position in the section number (354), is greater than or equal to the entire number of section data items divided by 2, or if an accumulated number of 0's, which indicates the frequency of accumulation of bit number 0 at a predetermined bit position in the section number (354), is greater than or equal to the entire number of section data items divided by 2.

14. The apparatus of claim 10, wherein the filter unit (330) comprises:
a section data generation unit (510) which is operable to generate the section data from a transport stream transmitted by the digital broadcasting receiver; and
a section data filter unit (550) which is operable to filter the section data based on filtering information for identifying a section required for operating an application requested by a user.

15. The apparatus of claim 14, wherein the filtering information is one of a table ID, a version, and a section number (354).

16. The apparatus of claim 14, wherein the section data filter unit (550) comprises a section number filter which is operable to filter the section data based on a section number (354).

17. The apparatus of claim 16, wherein only if the bit number of the section number (354), which corresponds to a bit position where the bit number of the mask is 1, is different from the bit number of the reference number (362) at the same bit position, the section number filter unit (355030) is operable to allow section data having the section number (354) to pass.

18. The apparatus of claim 17, wherein if a number of bit positions where the bit number of the mask is 1 is at least two, only if bit numbers of the reference number (362) at all bit positions where the bit number of the mask is 1 are different from the bit numbers of the section number (354), the filter unit (330) is operable to allow section data having the section number (354) to pass.

19. A method for generating a mask to be used for filtering section data based on a section number (354) in a digital broadcasting receiver, the method comprising determining whether to generate the mask based on an accumulated number of bit number 0's or 1's at each bit position of a section number (354) which is previously stored in the digital broadcasting receiver.

20. The method of claim 19, wherein the mask is generated if an accumulated number of 1's, which indicates a frequency of accumulation of bit number 1 at a predetermined bit position in the section number (354), is greater than or equal to an entire number of section data items divided by 2, or if an accumulated number of 0's which indicates the frequency of accumulation of bit number 0 at a predetermined bit position in the section number (354), is greater than or equal to the entire number of section data items divided by 2.

21. The method of claim 20, further comprising:
generating a reference number (362) which has a same number of bits as a number of bits of the mask, and in which a bit number is 1 at a bit position where the accumulated number of 0's or 1's is greater than or equal to the entire number of section data items divided by 2,
wherein only if a bit number of the section number (354), which corresponds to a bit position where a bit number of the mask is 1, is different from a bit number of the reference number (362) at a same bit position, filtering which allows section data having the section number (354) to pass is performed.

22. The method of claim 21, wherein if a number of bit positions where the bit number of the mask is 1 is at least two, only if bit numbers of the reference number (362) at all bit positions where the bit number of the mask is 1 are different from the bit numbers of the section number (354), filtering which allows section data having the section number (354) to pass is performed.

23. The method of claim 19, wherein the determining whether to generate the mask comprises:
extracting a section number (354) and a last section number (354) from section data which is previously stored in the digital broadcasting receiver; and
receiving the section number (354) and calculating an accumulated number of 1's which indicates the frequency of accumulation of bit number 1 and an accumulated number of 0's which indicates the frequency of accumulation of bit number 0 at each bit position of the section number (354);
wherein the method further comprises, if it is determined to generate a mask, generating a mask based on a bit position where the accumulated number of 0's or 1's exceeds the entire number of section data items divided by 2 in the section number (354).

24. The method of claim 22, wherein the generating the mask comprises:
generating a mask in which a bit number of the bit position where the accumulated number exceeds is 1 and remaining bit numbers are 0.

25. The method of claim 23, wherein the generating the mask further comprises:
if a bit number at the bit position where the accumulated number exceeds is 1, generating a reference number (362) in which the bit number at the bit position where the accumulated number exceeds is 1,
wherein only when a bit number of a section number (354), which corresponds to a bit position where the bit number of the mask is 1, is different from a bit number of the reference number (362) at the bit position, filtering which allows section data having the section number (354) to pass is performed.

26. A method for filtering section data based on a section number (354) in a digital broadcasting receiver, the method comprising:
generating a mask to be used for filtering the section data based on the section number (354) of section data and a last section number (354) which is previously stored in the digital broadcasting receiver; and
filtering the section data based on the mask,
wherein the generating the mask further comprises:
determining whether to generate the mask, based on an accumulated number which indicates a frequency of accumulation of a bit number at each bit position of the section number (354) and an entire number of section data items.

27. The method of claim 26, wherein the generating the mask comprises:
generating the mask if an accumulated number of 1's, which indicates a frequency of accumulation of bit number 1 at each bit position in the section number (354), is greater than or equal to the entire number of section data items divided by 2, or if an accumulated number of 0's, which indicates a frequency of accumulation of bit number 0 at each bit position in the section number (354), is greater than or equal to the entire number of section data items divided by 2.

28. The method of claim 27, wherein the generating the mask further comprises:
generating a reference number (362) which has a same number of bits as a number of bits of the mask, and in which the bit number is 1 at a bit position where an accumulated number of 0's or 1's is greater than or equal to the entire number of section data items divided by 2, and
wherein the filtering the section data comprises:
only if a bit number of the section number (354), which corresponds to a bit position where the bit number of the mask is 1, is different from a bit number of the reference number (362) at a same bit position, allowing section data having the section number (354) to pass.

29. The method of claim 28, wherein if a number of bit positions where the bit number of the mask is 1 is at least two, the filtering the section data further comprises, only when bit numbers of the reference number (362) at all bit positions where the bit number of the mask is 1 are different from the bit numbers of the section number (354), allowing section data having the section number (354) to pass.

30. The method of claim 26, wherein generating the mask comprises:
extracting a section number (354) and a last section number (354) from section data which is previously stored in the digital broadcasting receiver;
receiving the section number (354) and calculating an accumulated number of 1's, which indicates a frequency of accumulation of bit number 1, and an accumulated number of 0's, which indicates a frequency of accumulation of bit number 0 at each bit position of the section number (354);
determining whether to generate the mask based on accumulated numbers of 0's and 1's; and
if it is determined to generate a mask, generating a mask based on an excess bit number indicating a bit position where the accumulated number of 0's or 1's in the section number (354) exceeds, and an excess bit number indicating a bit number exceeding in a corresponding bit number.

31. The method of claim 30, wherein the generating the section number (354) mask comprises:
generating the mask if an accumulated number of 1's, which indicates the frequency of accumulation of bit number 1 at a predetermined bit position in the section number (354), is greater than or equal to the entire number of section data items divided by 2, or if an accumulated number of 0's, which indicates the frequency of accumulation of bit number 0 at a predetermined bit position in the section number (354), is greater than or equal to the entire number of section data items divided by 2.

32. The method of claim 28, wherein filtering comprises:
generating the section data from a transport stream transmitted by the digital broadcasting receiver; and
filtering the section data based on filtering information for identifying a section required for operating an application requested by a user.

33. The method of claim 32, wherein the filtering information is one of a table ID, a version, and a section number (354).

34. The method of claim 32, wherein the filtering section data comprises filtering the section data based on a section number (354).

35. The method of claim 34, wherein filtering section data comprises, only if a bit number of the section number (354) which corresponds to a bit position where the bit number of the mask is 1 is different from a bit number of the reference number (362) at the same bit position, allowing section data having the section number (354) to pass.

36. The method of claim 35, wherein if a number of bit positions where the bit number of the mask is 1 is at least two, filtering section data comprises, only if bit numbers of the reference number (362) at all bit positions where the bit number of the mask is 1 are different from the bit numbers of the section number (354), allowing section data having the section number (354) to pass.

37. A computer readable recording medium having embodied thereon a computer program which executes a method for generating a mask to be used for filtering section data based on a section number (354) in a digital broadcasting receiver, the method comprising determining whether to generate the mask based on an accumulated number of bit number 0's or 1's at each bit position of a section number (354) which is previously stored in the digital broadcasting receiver.
